# EUROPEAN PATENT APPLICATION

(11) **EP 3 959 984 A1**
(43) Date of publication of application: **02.03.2022**
(21) Application number: 20020385.9
(22) Date of filing: 26.08.2020
(51) Int. Cl.: A22B 5/00, A22C 17/00, A23L 3/375, A23L 3/3589, A23B 4/09, A22C 9/00, A23B 4/28

(54) **METHOD AND DEVICE FOR COOLING A PIECE OF MEAT**

(71) Applicant: Linde GmbH, 82049 Pullach (DE)
(72) Inventor: Wijlens, Jos, 4143 AW Leerdam (NL)
(74) Representative: Gellner, Bernd

(57) **Abstract**

Provided is a method for cooling a piece of meat. The method comprises penetrating a hollow needle into the piece of meat, the hollow needle extending in a longitudinal direction between an inlet end and a tip, and the hollow needle having an inlet opening at the inlet end and one or more outlet orifices near and/or at the tip; and injecting liquid carbon dioxide, CO₂, through the one or more outlet orifices into the piece of meat, wherein the liquid CO₂ is injected for a predetermined length of time. Further provided is an injection device for injecting liquid CO₂ into a piece of meat comprising a hollow needle extending in a longitudinal direction between an inlet end and a tip, the hollow needle having an inlet opening at the inlet end and one or more outlet orifices near and/or at the tip; a valve connected to the inlet opening and connectable to a supply of liquid CO₂ and configured to control a flow of liquid CO₂ into the inlet opening when connected to the supply of liquid CO₂; and a timer connected to the valve and configured to open the valve for a predetermined length of time when activated.

## Description

The present invention relates to a method and device for cooling a piece of meat of a freshly slaughtered animal.

### BACKGROUND

Meat of a freshly slaughtered animal can develop deficiencies, resulting in poor quality meat such as PSE meat (pale, soft, exudative meat). These deficiencies are often related to conditions prior and during the slaughtering process. Particularly, a high stress level of the animals prior to slaughtering may result in the animal metabolism producing substances that, if not metabolized, have a negative effect on the quality of meat. However, due to the slaughtering the metabolism is stopped such that these substances remain in the affected meat.

For example, pigs may produce lactic acid due to an increased metabolism in stressful situations resulting in a low pH within the muscle fibers, which in turn may result in a denaturation of the muscle leading to abnormal cell structure. The result is a pale tissue color, and a soft texture. Similar issues can occur for other animals, e.g. for beef, poultry, or even fish.

Therefore, it is a problem to reduce or prevent the development of such deficiencies in the meat or pieces of meat in freshly slaughtered animals.

### SUMMARY

According to the invention the problem is solved by a method for cooling a piece of meat and an injection device according to the independent claims. Dependent claims relate to preferred embodiments.

The method comprises penetrating a hollow needle into the piece of meat, the hollow needle extending in a longitudinal direction between an inlet end and a tip, and the hollow needle having an inlet opening at the inlet end and one or more outlet orifices near and/or at the tip; and injecting liquid carbon dioxide, CO₂, through the one or more outlet orifices into the piece of meat, wherein the liquid CO₂ is injected for a predetermined length of time.

By the injection through the orifices the liquid CO₂ is distributed in the meat and effects a cooling of the piece of meat from the inside which allows for a faster cooling than cooling only from the outside. Particularly, expansion and evaporation of liquid CO₂ may lead to forming of carbonic snow, i.e. solid CO₂. The faster cooling reduces denaturation of the meat and suppresses development of deficiencies in the meat.

It should be mentioned that the method according to the invention is not intended to be used for living tissue, but only for non-living (dead) tissue, i.e. meat, of animals.

The predetermined length of time (injection time) is preferably in the range from 1 s to 10 s (seconds), more preferably in the range from 3 s to 5 s. Also, preferably, the amount of liquid CO₂ is in the range from 10 g to 30 g, more preferably in the range from 12 g to 20 g.

Preferably the liquid CO₂ has a pressure in the range from 35 bar to 60 bar, more preferably in the range from 40 bar to 50 bar. At these pressures the temperature of liquid CO₂ being in equilibrium with its vapor (as given by the boiling point curve), is approximately between 0 °C and 20 °C, preferably approximately between 5 °C and 15 °C, i.e. on the one side the meat will not freeze or get sticky, which would hinder the removal of the needle, and on the other side a considerable cooling effect can be achieved. Correspondingly the method preferably comprises providing the liquid CO₂ at a pressure in the range from 35 bar to 60 bar, preferably from 40 bar to 50 bar; and guiding the liquid CO₂ into the inlet opening of the hollow needle.

Further, the method preferably comprises determining a penetration depth of the hollow needle into the piece of meat; and inhibiting the step of injecting the liquid CO2 when the penetration depth is smaller than a predetermined threshold distance. In this way injection for the liquid CO₂ at a depth too close to the surface of the piece of meat, where only a non optimal cooling effect could be achieved is avoided. Also, release of the liquid CO₂ outside of the piece of meat is not possible. Such a release could, due to the cooling, negatively affect the working environment of the piece of meat and, specifically, pose a health risk for a worker handling an injection device.

The liquid CO₂ is preferably injected at least partially orthogonally to the longitudinal direction of the hollow needle. This results in a better distribution of the CO₂ in the meat and accordingly cooling of a bigger portion of the piece of meat. To increase this effect, the liquid CO₂ is preferably injected in different directions through more than one orifice.

The injection device for injecting liquid carbon dioxide, CO₂, into a piece of meat comprises a hollow needle extending in a longitudinal direction between an inlet end and a tip, the hollow needle having an inlet opening at the inlet end and one or more outlet orifices near and/or at the tip; a valve connected to the inlet opening and connectable to a supply of liquid CO₂ and configured to control a flow of liquid CO₂ into the inlet opening when connected to the supply of liquid CO₂; and a timer connected to the valve and configured to open the valve for a predetermined length of time when activated.

The injection device allows for an implementation of the method in a controlled manner. The liquid CO₂ can, for example, be supplied in CO₂ cylinders in pressurized form. The supply of CO₂ (CO₂ cylinder) is connected to the valve by a pipe or hollow cable. The hollow needle can be connected to the valve directly, e.g. by a screw connection, or indirectly, e.g. by a pipe or hollow cable, which may be connected to the valve and/or the needle by a screw connection. Preferably, the hollow needle is connected to the valve in a replaceable manner; the connection may include a screw connection to achieve this, for example. The valve is preferably a magnetic valve (solenoid valve) that is electromagnetically actuated.

The injection device preferably comprises the supply of liquid CO₂, wherein a pressure of the liquid CO₂ is in the range from 35 bar to 60 bar, preferably from 40 bar to 50 bar. These pressure ranges allow to achieve an advantageous cooling effect, as explained above.

Preferably the hollow needle has a needle diameter in the range from 1 mm to 5 mm, more preferably from 1 mm to 3 mm, most preferably from 1 mm to 2 mm; wherein the hollow needle has a needle length between 100 mm and 200 mm; and wherein the one or more outlet orifices have an orifice diameter in the range between 0.5 mm and 1.5 mm. With these measurements of the needle the liquid CO₂ can advantageously be applied in a suitable depth and be distributed, as determined by the orifice diameter, in a manner to achieve a maximal cooling effect, in particular by forming carbonic snow. An inner diameter of the hollow needle is preferably in the range from 0.5 mm to 1.5 mm, more preferably in the range from 0.8 mm to 1.2 mm.

Further, preferably the one or more outlet orifices are located within a distance of 10 times the needle diameter from the tip, preferably within a distance of 5 times the needle diameter from the tip. In other words, the outlet orifices are located near the tip of the needle, enabling the release of the liquid CO₂ in the correct depth to achieve a cooling effect.

Preferably, at least some, more preferably all, of the one or more outlet orifices are located on a side wall of the hollow needle. This allows to distribute the liquid CO₂ at least partially orthogonally to the length direction of the hollow needle, leading to a distribution of the liquid CO₂ over a bigger volume.

Particularly preferred is that the hollow needle has two orifices that are arranged opposite to each other on the sidewall of the needle. Another particularly preferred arrangement is that the hollow needle has three orifices arranged on the sidewall in a symmetric manner around the length axis of the needle.

Preferably the injection device comprises a shield moveable along the longitudinal direction and biased towards the tip of the needle; and a stop positioned at a predetermined threshold distance from the tip of the hollow needle and arranged to come into contact with the shield when the shield is moved towards the inlet opening; wherein the device is configured to inhibit opening the valve, when the shield is not in contact with the stop. Release of liquid CO₂ in a region too close to the surface of the meat or outside the piece of meat can be avoided by the use of a shield in interaction with the stop.

Preferably, the injection device further comprises a controller connected to the stop; wherein the controller includes the timer or is connected to the timer; and wherein the controller is configured to activate the timer, when the shield comes into contact with the stop. This enables an automatic release of liquid CO₂ as soon as the threshold depth is reached.

The controller is preferably connected to the supply of liquid CO2, and configured to control the pressure of the liquid CO2. This allows a certain control of the cooling effect.

Preferably the hollow needle, the valve, and, if present, the shield and the stop are integrated in an injection pistol configured to be held by hand of a human or by a robotic arm. The injection pistol is then typically connected to the supply of CO₂ and, if present, the controller by cables that transport the CO₂ and/or control signals. The integration into an injection pistol allow the flexible and easy use of the injection device in a typical working environment, in particular use for pieces of meat having different shapes is possible.

Preferably, the controller is integrated in the injection pistol. Cables between the controller and the injection pistol (e.g. from the stop to the controller and from the controller to the valve) are not necessary with this arrangement.

### BRIEF DESCRIPTION OF THE DRAWINGS

The invention can be more fully understood by the subsequent description, in which reference is made to the accompanying drawings, wherein:
Fig. 1 shows a flow diagram of a preferred embodiment of the method for cooling a piece of meat according to the invention;
Fig. 2 shows a structural drawing of a preferred embodiment of the injection device according to the invention.

### DETAILED DESCRIPTION

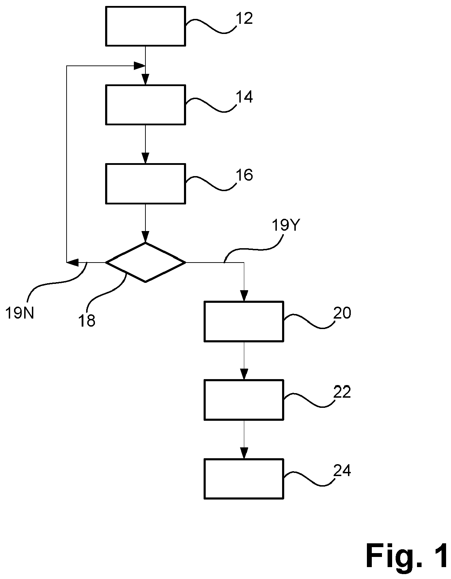

Fig. 1 shows a flow diagram of a preferred embodiment of a method according to the invention. In the embodiment, first, in step 12 the liquid CO₂ is provided at an appropriate pressure in the range from 35 to 60 bar, preferably from 40 to 50 bar. Typically, the liquid CO₂ is provided in a supply container, e.g. a cylinder.

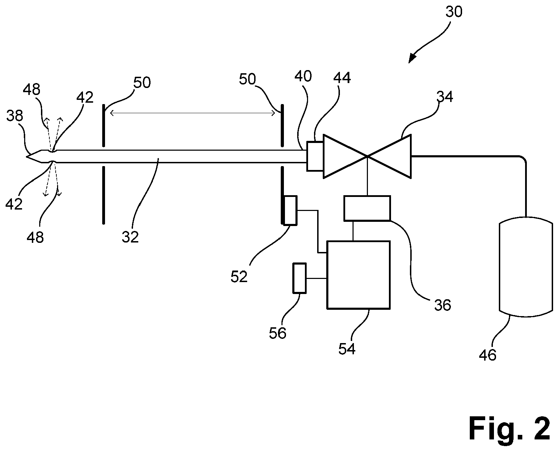

In step 14 the hollow needle is penetrated into a piece of meat that is to be cooled. Obviously, the piece of meat of a freshly slaughtered animal has to be provided beforehand. The hollow needle used has an inlet opening at an inlet end and one or more outlet orifices near and/or at a tip. The hollow needle will be described more specifically below in connection with the injection device (Fig. 2).

In step 16, while the needle is penetrated into the meat, a penetration depth is determined and, in step 18, it is checked whether a predetermined threshold depth has been reached. When the predetermined threshold depth has not been reached (arrow 19N), the method continues with step 14, i.e. the needle is penetrated deeper into the piece of meat. As result injection is inhibited until the needle has reached the depth as determined by the threshold depth.

When, on the other hand, the predetermined threshold depth has been reached (arrow 19Y), the method continues with step 20 in which liquid CO₂ is guided from the supplied liquid CO₂ into the inlet opening of the hollow needle, for example by opening a valve that is positioned between the supply of CO₂ and the inlet opening and is configured to control the flow of CO₂ into the hollow needle.

The liquid CO₂ leaves the hollow needle through the one or more outlet orifices such that the liquid CO₂ is injected into the piece of meat, step 22. The injection is continued over a predetermined length of time after which the guiding of CO₂ into the inlet opening is stopped, e.g. by closing the valve. In step 24 the needle is removed from the piece of meat to finish the process. The steps from step 12 (penetrating) to step 22 (injecting) are preferably repeated at different positions of the piece of meat, wherein a distance between different injection points is more preferably in the range from 10 cm to 20 cm.

Tests have shown that by injecting 12 to 20 g of liquid CO₂ with a pressure in the range from 40 to 50 bar within a time length from 3 to 5 s through a needle having a length of approximately 15 cm and a diameter of 2 mm a cooling of the centre of the meat (i.e. inner sections of the piece of meat) from 38 °C down to approximately 10 °C can be achieved. The affected section with each injection has typically a radius from 5 cm to 10 cm.

Using the method according to the invention a fast cooling to the centre of the meat, close to the bone, can be achieved. After injecting the liquid CO₂ the piece of meat is preferably further cooled (e.g. in a cooling chamber) to a temperature below 7 °C, e.g. for at least 12 hours depending on the size of the piece of meat.

Fig. 2 shows a structural drawing of a preferred embodiment of the injection device 30 according to the invention. The shown elements, their relative size, and the relative dimension of each element itself (i.e. height, width, length of an element) are not true to scale.

The injection device 30 includes a hollow needle 32 that is connected to a valve 34 which, for controlling its actuation, is connected to a timer 36. The hollow needle 32 extends in a length direction between a tip 38, which for example has the form of a cone, and an inlet end 40. At or near the tip outlet orifices 42 are located. In the needle shown in the figure has, for example, two outlet orifices 42 positioned opposite to each other in a side wall of the hollow needle. More generally any other number (1, 2, 3, 4, ...) of outlet orifices is possible; two or three outlet orifices are preferred. Different outlet orifices may, unlike shown in the figure, be located at different distances from the tip 38.

The outlet orifices 42 are connected to a cavity of the needle that is surrounded by the sidewall to form the hollow needle. The cavity extends in the longitudinal direction and is connected to an inlet opening at the inlet end 40 of the hollow needle. The hollow needle 32 is connected to the valve 34 by a needle hub 44, for example, which may include a screw connection, such that the hollow needle is replaceable. Other types of connection between the hollow needle 32 and the valve 34 are possible, such as over a hollow cable or a pipe. In any case, the connection is in a manner, that a fluid, whose flow is controlled by the valve can flow through the inlet opening into the cavity of the hollow needle, i.e. the valve outlet is in fluidic connection with the inlet opening of the hollow needle. The valve 34 may preferably be a solenoid valve.

The valve 34 is connected to a timer 36 that controls the actuation of the valve, i.e. its opening and closing. The timer 36 is configured to open the valve over a predetermined time length (preferably in the range from 1 to 10 s, more preferably in the range from 3 to 5 s), while otherwise the valve is held in a closed state.

Further, the valve 34, specifically its valve inlet, is connected to a supply 46 of liquid CO₂. To connect the supply 46 of liquid CO₂ with the valve typically a screw connection or another connection element is present on the valve, which can be connected to a pipe or cable leading to the supply. The supply 46 of liquid CO₂ is configured to provide liquid CO₂ at a certain pressure, for example in the range from 35 to 60 bar, preferably from 40 to 50 bar. Typically the supply 46 of liquid CO₂ is a cylinder (pressurized CO₂ cylinder) or another commercially available container for CO₂. Upon opening the valve 34 liquid CO₂ flows from the supply 46 of liquid CO through the valve 34, through the inlet opening into the cavity of the hollow needle 32, and leaves the hollow needle through the outlet orifices 42, as indicated by arrows 48.

Preferably, the injection device 30 further includes a shield 50 and a stop 52. The shield 50 is shown in two positions in Fig. 2, between which it is movable (indicated by an arrow) along the length direction of the needle 32. The shield is essentially a plate that extends orthogonally to the length direction of the needle. It is supported by one or more longitudinal guiding elements (not shown) that extend parallel to the needle, i.e. in length direction. The shield can be provided in close proximity to the needle or, preferably, the shield can be provided with a hole through which the needle extends, as shown in Fig. 2.

The shield 50 is biased, e.g. by a spring element, towards the tip 38 of the needle 32, i.e. towards the left position in the figure. In the other shown position (right position in the figure), the shield 50 is in contact with the stop 52. Accordingly, when the needle is penetrated into the piece of meat, the shield comes in contact with the surface of the meat and is moved from the position near the tip towards the position at the stop. Thus, the position of the shield 50 is a measure for the penetration depth of the needle 32, wherein the position at the stop represents a threshold depth.

The injection device 30 may be configured such that injection of liquid CO₂ is inhibited when the shield 50 is not in contact with the stop 52, i.e. the injection device is configured such that the valve cannot be opened unless the shield is in contact with the stop. The stop 52 may include a contact switch or some other kind of proximity switch to detect when the shield 50 is in contact with the stop.

A preferred way to implement this inhibiting function of the injection device 30 is to include a controller 54 in the injection device which is connected to the stop 52 and the timer 36. The timer 36 may optionally be included in the controller 54. The controller 54 receives a signal from the stop 52 indicating whether or not the shield 50 is in contact with the stop. Only when the shield is in contact with the stop, the controller triggers (activates) the timer to open the valve for the predetermined time length.

Preferably, the injection device 30 is provided as an integrated device, in particular in form of an injection pistol that can be held by hand of a human or by a robotic arm. In the first case (pistol to be held by a human hand), a grip (not shown in the figure) for a human hand can be provided in which parts of the injection device (controller, timer, and/or valve ...) are integrated. In this case the injection device (pistol) may optionally include a trigger element 56 connected to the controller 54 and configured to be pressed by a human. The controller 54 is then configured to only activate the timer 36 when the trigger element 56 is pressed, i.e. the timer (and thus the injection) is only activated when the shield is in contact with the stop and the trigger element is pressed. In the second case (pistol to be held by a robotic arm), the controller may be connected to a control device of the robotic arm, such that the timer can be activated by the control device of the robotic arm through the controller (with the possible additional condition that the shield has to be in contact with the stop).

While the invention has been described in terms of embodiments and examples in the preceding specification, the scope of the present invention is restricted by the appended claims not by specific embodiments of the specification. It should be noted that elements of the different embodiments may be combined even if not explicitly stated. Specifically, features mentioned in connection to the method equally apply to the device and vice versa.

## Claims

1. A method for cooling a piece of meat, comprising
penetrating (14) a hollow needle (32) into the piece of meat, the hollow needle extending in a longitudinal direction between an inlet end and a tip, and the hollow needle having an inlet opening at the inlet end and one or more outlet orifices (42) near and/or at the tip (38); and
injecting (22) liquid carbon dioxide, CO₂, through the one or more outlet orifices into the piece of meat, wherein the liquid CO₂ is injected for a predetermined length of time.

2. The method of claim 1, comprising
providing (12) the liquid CO₂ at a pressure in the range from 35 bar to 60 bar, preferably from 40 bar to 50 bar; and
guiding (20) the liquid CO₂ into the inlet opening of the hollow needle.

3. The method of any one of the preceding claims, comprising
determining (16) a penetration depth of the hollow needle into the piece of meat; and
inhibiting (18) the step of injecting the liquid CO₂ when the penetration depth is smaller than a predetermined threshold distance.

4. The method of any one of the preceding claims, wherein the liquid CO₂ is injected at least partially orthogonally to the longitudinal direction of the hollow needle.

5. The method of any one of the preceding claims, wherein the predetermined length of time is in the range from 1 s to 10 s; preferably in the range from 3 s to 5 s.

6. An injection device (30) for injecting liquid carbon dioxide, CO₂, into a piece of meat comprising
a hollow needle (32) extending in a longitudinal direction between an inlet end (40) and a tip (38), the hollow needle having an inlet opening at the inlet end and one or more outlet orifices (42) near and/or at the tip;
a valve (34) connected to the inlet opening and connectable to a supply (46) of liquid CO₂ and configured to control a flow of liquid CO₂ into the inlet opening when connected to the supply of liquid CO₂; and
a timer (36) connected to the valve and configured to open the valve for a predetermined length of time when activated.

7. The device of claim 6, further comprising the supply (46) of liquid CO₂, wherein a pressure of the liquid CO₂ is in the range from 35 bar to 60 bar, preferably from 40 bar to 50 bar.

8. The device of any one of claims 6 or 7, wherein the hollow needle (32) has a needle diameter in the range from 1 mm to 5 mm, preferably in the range from 1 mm to 3 mm, more preferably in the range from 1 mm to 2 mm; wherein the hollow needle has a needle length between 100 mm and 200 mm; and wherein the one or more outlet orifices have a orifice diameter in the range between 0.5 mm and 1.5 mm.

9. The device of any one of the preceding claims, wherein the one or more outlet orifices (42) are located within a distance of 10 times the needle diameter from the tip, preferably within a distance of 5 times the needle diameter from the tip.

10. The device of any one of the preceding claims, wherein at least some, preferably all, of the one or more outlet orifices (42) are located on a side wall of the hollow needle.

11. The device of any one of the claims 6 to 10, further comprising
a shield (50) moveable along the longitudinal direction and biased towards the tip of the needle;
a stop (52) positioned at a predetermined threshold distance from the tip and arranged to come into contact with the shield when the shield is moved towards the inlet opening;
wherein the device is configured to inhibit opening the valve, when the shield is not in contact with the stop.

12. The device of claim 11, further comprising a controller (54) connected to the stop; wherein the controller includes the timer or is connected to the timer; and wherein the controller is configured to activate the timer, when the shield comes into contact with the stop.

13. The device of claim 12, the controller (54) further being connected to the supply of liquid CO₂, and configured to control the pressure of the liquid CO₂.

14. The device of any one of claims 6 to 13, wherein the hollow needle, the valve, and, if dependent on claim 10, the shield and the stop are integrated in an injection pistol configured to be held by hand of a human or by a robotic arm.

15. The device of claim 14, if dependent on claim 12 or 13, wherein the controller is integrated in the injection pistol.
